# FASCICULE DE BREVET EUROPEEN

(11) **EP 4 501 793 B1**
(45) Date de publication et mention de la délivrance du brevet: **02.09.2026**
(21) Numéro de dépôt: 24188740.5
(22) Date de dépôt: 16.07.2024
(51) Int. Cl.: B64D 29/06, B64D 33/02

(54) **ENTRÉE D'AIR D'AÉRONEF COMPRENANT UNE PAROI EXTÉRIEURE ET DES CADRES AVANT ET ARRIÈRE RELIÉS PAR AU MOINS UN ÉLÉMENT DE JONCTION DISTINCT DE LA PAROI EXTÉRIEURE**
FLUGZEUGLUFTEINLASS MIT EINER AUSSENWAND UND VORDER- UND HINTERRAHMEN, DIE DURCH MINDESTENS EIN SEPARATES VERBINDUNGSELEMENT DER AUSSENWAND VERBUNDEN SIND
AIRCRAFT AIR INTAKE COMPRISING AN OUTER WALL AND FRONT AND REAR FRAMES CONNECTED BY AT LEAST ONE JUNCTION ELEMENT DISTINCT FROM THE OUTER WALL

(30) Priorité: 31.07.2023 FR 2308265
(43) Date de publication de la demande: 05.02.2025
(73) Titulaire: AIRBUS OPERATIONS (S.A.S.), 31060 Toulouse (FR)
(72) Inventeur: CHANCERELLE, Emeric, 31060 TOULOUSE (FR); DOBIGEON, Franck, 31060 TOULOUSE (FR); SAUDEL, Brice, 31060 TOULOUSE (FR); SMITH, Grégoire, 31060 TOULOUSE (FR)
(74) Mandataire: Fantin, Laurent

(56) Documents cités:
- CA-A1- 2 500 963
- US-A1- 2011 284 095
- US-A1- 2020 130 856

## Description

La présente demande se rapporte à une entrée d'air d'aéronef comprenant une paroi extérieure et des cadres avant et arrière reliés par au moins un élément de jonction distinct de la paroi extérieure ainsi qu'à un aéronef comprenant au moins un ensemble de propulsion qui comporte une telle entrée d'air.

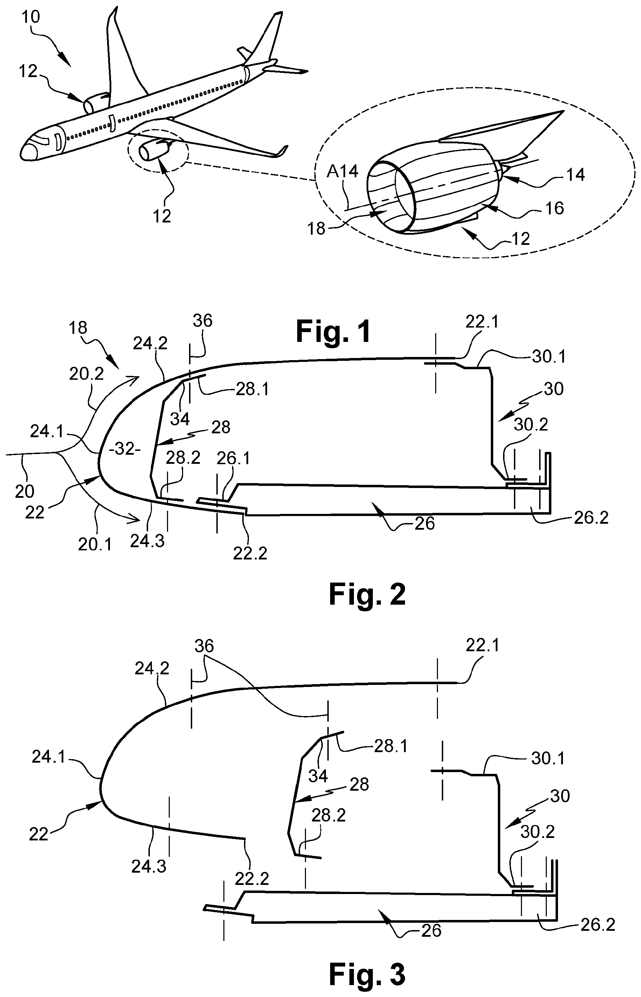

Selon un mode de réalisation visible sur la figure 1, un aéronef 10 comprend plusieurs ensembles de propulsion 12 comprenant chacun une motorisation 14 ainsi qu'une nacelle 16 entourant la motorisation 14 et permettant notamment de canaliser un flux d'air en direction de la motorisation 14.

La motorisation 14 présente un axe de rotation A14. Pour la suite de la description, une direction longitudinale est une direction parallèle à l'axe de rotation A14. Un plan longitudinal est un plan contenant l'axe de rotation A14. Enfin, un plan transversal est un plan perpendiculaire à l'axe de rotation A14. Les notions avant et arrière font référence au sens d'écoulement du flux d'air dans la motorisation en fonctionnement, qui s'écoule de l'avant vers l'arrière.

Comme illustré sur la figure 2, chaque nacelle 16 comprend, à l'avant, une entrée d'air 18 configurée pour séparer un flux d'air 20 laminaire en un flux d'air intérieur 20.1 laminaire qui pénètre dans la nacelle 16 en direction de la motorisation 14 et un flux d'air extérieur 20.2 laminaire s'écoulant à l'extérieur de la nacelle 16.

Selon un mode de réalisation visible sur les figures 2 et 3, une entrée d'air 18 comprend une lèvre 22 qui présente une forme en C en coupe dans un plan longitudinal. La lèvre 22 comprend un bord d'attaque 24.1 qui scinde le flux d'air 20 en un flux d'air intérieur 20.1 et un flux d'air extérieur 20.2, une portion extérieure 24.2 qui s'étend du bord d'attaque 24.1 jusqu'à un bord arrière extérieur 22.1 de la lèvre 22 et sur laquelle s'écoule le flux d'air extérieur 20.2 ainsi qu'une portion intérieure 24.3 qui s'étend du bord d'attaque 24.1 jusqu'à un bord arrière intérieur 22.2 de la lèvre 22 et sur laquelle s'écoule le flux d'air intérieur 20.1. L'entrée d'air 18 comprend également :
- un panneau intérieur 26 positionné dans le prolongement de la portion intérieure 24.3 de la lèvre 22 qui présente un bord avant 26.1 relié au bord arrière intérieur 22.2 de la lèvre 22 et un bord arrière 26.2,
- un cadre avant 28, en forme d'anneau, qui présente un bord extérieur périphérique 28.1 relié à la portion extérieure 24.2 de la lèvre 22 ainsi qu'un bord intérieur périphérique 28.2 relié à la portion intérieure 24.3 de la lèvre 22 et/ou au panneau intérieur 26,
- un cadre arrière 30, en forme d'anneau, qui présente un bord extérieur périphérique 30.1 relié au bord arrière extérieur 22.1 de la lèvre 22 et un bord intérieur périphérique 30.2 relié au bord arrière 26.2 du panneau intérieur 26.

Le cadre avant 28 et la lèvre 22 délimitent un conduit annulaire 32 en forme de D, appelé D-duct.

Selon un mode de réalisation, les cadres avant et arrière 28, 30 sont positionnés approximativement dans deux plans transversaux. En variante, le cadre avant peut être légèrement tronconique et former avec un plan transversal un angle de l'ordre de 10°.

Selon une configuration, le panneau intérieur 26 est équipé d'une structure d'atténuation acoustique.

Comme illustré sur les figures 2 et 3, selon un agencement, le bord extérieur périphérique 28.1 du cadre avant 28 présente un rebord 34 plaqué contre la portion extérieure 24.2 de la lèvre 22 et relié à cette dernière par une série d'éléments de liaison 36 répartis sur toute la circonférence de la nacelle.

Selon un autre mode de réalisation, le bord arrière extérieur de la lèvre 22 est relié au cadre avant 28 par une première série d'éléments de liaison. En complément, l'entrée d'air comprend un panneau extérieur positionné dans le prolongement de la portion extérieure 24.2 de la lèvre 22 qui présente un bord avant relié au cadre avant ainsi qu'un bord arrière relié au cadre arrière.

Le fait de réaliser la lèvre et le panneau extérieur d'un seul tenant comme illustré sur les figures 2 et 3 permet de ne pas avoir de discontinuité au niveau de la surface en contact avec le flux d'air extérieur et donc de limiter les perturbations aérodynamiques. Toutefois, lorsque la lèvre s'étend jusqu'au cadre arrière 30, son remplacement nécessite de démonter un grand nombre d'éléments de liaison, à savoir des éléments de liaison reliant la lèvre 22, le panneau intérieur 26 et le bord intérieur périphérique 28.2 du cadre avant 28, des éléments de liaison reliant la lèvre 22 et le bord extérieur périphérique 28.1 du cadre avant 28 et enfin des éléments de liaison reliant la lèvre 22 et le cadre arrière 30.

Selon un autre inconvénient, quel que soit le mode de réalisation, l'entrée d'air 18 comprend au moins une série d'éléments de liaison, positionnés au droit du cadre avant 28, qui affleurent au niveau d'une paroi de l'entrée d'air (la lèvre 22 et/ou un panneau extérieur) en contact avec le flux d'air extérieur 20.2.

En fonctionnement, le flux d'air extérieur 20.2 est laminaire à partir du bord d'attaque 24.1 (également appelé point d'arrêt aérodynamique) sur une certaine longueur qui doit être la plus longue possible pour réduire la traînée générée par l'entrée d'air 18 de la nacelle 16. En l'absence d'éléments de liaison (comme des vis, des rivets ou autres), la longueur théorique, caractérisant la zone d'air laminaire, pourrait atteindre une distance de l'ordre de 400 à 950 mm en fonction de la taille de la nacelle. Selon le mode de réalisation visible sur les figures 2 et 3, l'entrée d'air 18 comprend des éléments de liaison 36 espacés du bord d'attaque 24.1 d'une distance inférieure à 500 mm, de l'ordre de 300 mm, qui génèrent des perturbations, ce qui se traduit par une augmentation de la traînée de l'entrée d'air 18 de la nacelle 16 et, in fine, de la consommation énergétique de l'aéronef 10.

Le document US2020/130856 décrit une entrée d'air de l'art antérieur.

La présente invention vise à remédier à tout ou partie des inconvénients de l'art antérieur.

A cet effet, l'invention a pour objet une entrée d'air d'aéronef comprenant :
- une lèvre qui comporte un bord d'attaque, un bord arrière extérieur ainsi qu'un bord arrière intérieur,
- un panneau intérieur qui comporte un bord avant relié au bord arrière intérieur de la lèvre et un bord arrière,
- un cadre avant qui comporte un bord extérieur périphérique avant ainsi qu'un bord intérieur périphérique avant relié à la lèvre et/ou au panneau intérieur,
- un cadre arrière qui comporte un bord extérieur périphérique arrière, directement ou indirectement, relié au bord arrière extérieur de la lèvre et un bord intérieur périphérique arrière relié au bord arrière du panneau intérieur.

Selon l'invention, l'entrée d'air comprend au moins un élément de jonction reliant les bords extérieurs périphériques avant et arrière du cadre avant et du cadre arrière, le bord extérieur périphérique avant étant espacé de la lèvre. En complément, chaque élément de jonction présente une extrémité avant, l'entrée d'air comprenant un système de liaison avant reliant l'extrémité avant de chaque élément de jonction et le bord extérieur périphérique avant du cadre avant, le bord extérieur périphérique avant du cadre avant étant recourbé de manière à présenter une forme sensiblement cylindrique, le système de liaison avant comprenant au moins une série d'éléments de liaison, répartis sur au moins un cercle, traversant le bord extérieur périphérique avant du cadre avant et l'extrémité avant de chaque élément de jonction.

Le cadre avant n'étant pas relié à la lèvre, l'entrée d'air ne présente aucun élément de liaison, au droit du cadre avant, affleurant au niveau de la face extérieure de la lèvre. Ainsi, le flux d'air qui s'écoule en contact avec l'entrée d'air conserve son caractère laminaire sur une longueur la plus importante possible.

Selon un mode de réalisation, l'entrée d'air comprend un unique élément de jonction tubulaire, sensiblement coaxial au panneau intérieur.

Selon un autre mode de réalisation, l'entrée d'air comprend plusieurs éléments de jonction espacés entre eux, répartis autour du panneau intérieur.

Selon une autre caractéristique, chaque élément de jonction présente une extrémité arrière, l'entrée d'air comprenant un système de liaison arrière qui relie l'extrémité arrière de chaque élément de jonction et le bord extérieur périphérique arrière du cadre arrière.

Selon une autre caractéristique, l'extrémité arrière de chaque élément de jonction est recourbée et plaquée contre le bord extérieur périphérique arrière du cadre arrière. En complément, le système de liaison arrière comprend au moins une série d'éléments de liaison, répartis sur au moins un cercle, traversant l'extrémité arrière de chaque élément de jonction et le bord extérieur périphérique arrière du cadre arrière.

Selon une autre caractéristique, la lèvre et chaque élément de jonction sont reliés par un système de liaison situé à proximité du bord arrière extérieur de la lèvre.

Selon une autre caractéristique, chaque élément de jonction présente une nervure, au droit du système de liaison, configurée pour espacer la lèvre et chaque élément de jonction en dehors de la nervure.

Selon une autre caractéristique, pour chaque élément de jonction, la nervure présente une partie centrale sensiblement cylindrique, plus espacée du panneau intérieur que le reste de l'élément de jonction, ainsi que deux parties tronconiques reliant la partie centrale au reste de l'élément de jonction.

L'invention a également pour objet un aéronef comportant au moins un ensemble de propulsion qui comprend une entrée d'air selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe longitudinale d'une entrée d'air d'une nacelle d'aéronef illustrant un mode de réalisation de l'art antérieur,
- La figure 3 est une coupe longitudinale de l'entrée visible sur la figure 2, la lèvre étant à l'état démonté
- La figure 4 est une coupe longitudinale d'une entrée d'air d'une nacelle d'aéronef illustrant un mode de réalisation de l'invention,
- La figure 5 est une coupe longitudinale d'une l'entrée d'air d'une nacelle d'aéronef illustrant un autre mode de réalisation de l'invention, la lèvre étant à l'état démonté,
- La figure 6 est une coupe longitudinale de l'entrée d'air visible sur la figure 5, la lèvre étant à l'état monté,
- La figure 7 est une vue en perspective d'une partie d'une entrée d'air, sans lèvre, illustrant un mode de réalisation de l'invention, et
- La figure 8 est une vue en perspective d'une partie d'une entrée d'air illustrant un mode de réalisation de l'invention.

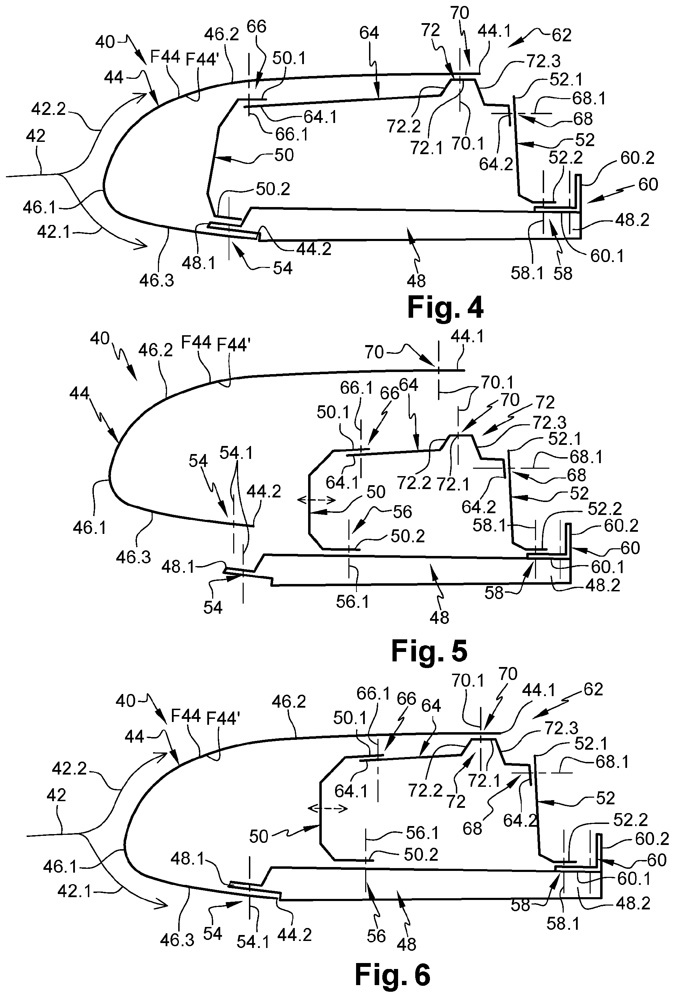

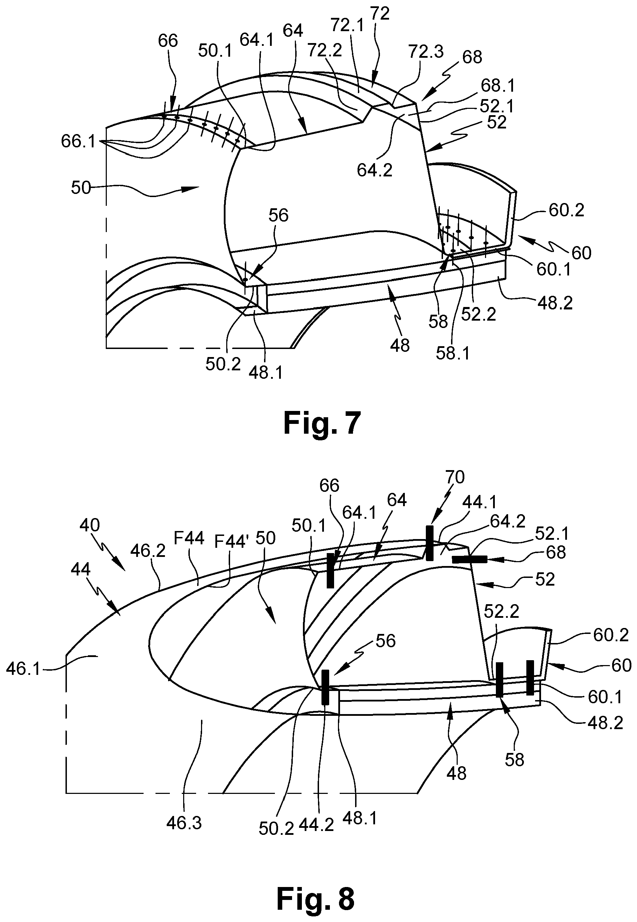

Selon un mode de réalisation, un aéronef comprend au moins un ensemble de propulsion qui comporte une entrée d'air 40 pour canaliser un flux d'air 42 en direction d'une motorisation. A l'exception de l'entrée d'air 40, les autres éléments de l'ensemble de propulsion ne sont pas représentés sur les figures 4 à 8. Ils sont connus de l'homme du métier et peuvent être identiques à ceux de l'art antérieur. L'entrée d'air 40 présente un axe longitudinal confondu avec l'axe de la motorisation lorsque l'entrée d'air 40 est reliée à la motorisation.

L'entrée d'air 40 comprend une lèvre 44 qui présente une forme en C en coupe dans un plan longitudinal. La lèvre 44 comprend un bord d'attaque 46.1 qui scinde le flux d'air 42 en un flux d'air intérieur 42.1 et un flux d'air extérieur 42.2, une portion extérieure 46.2 qui s'étend du bord d'attaque 46.1 jusqu'à un bord arrière extérieur 44.1 de la lèvre 44 et sur laquelle s'écoule le flux d'air extérieur 42.2 ainsi qu'une portion intérieure 46.3 qui s'étend du bord d'attaque 46.1 jusqu'à un bord arrière intérieur 44.2 de la lèvre 44 et sur laquelle s'écoule le flux d'air intérieur 42.1.

La lèvre 44 présente une face extérieure F44 en contact avec les flux d'air intérieur et extérieur 42.1, 42.2 ainsi qu'une face intérieure F44'
L'entrée d'air 40 comprend également :
- un panneau intérieur 48 positionné dans le prolongement de la portion intérieure 46.3 de la lèvre 44, sensiblement coaxial à l'axe longitudinal de l'entrée d'air, qui présente un bord avant 48.1 relié au bord arrière intérieur 44.2 de la lèvre 44 et un bord arrière 48.2,
- un cadre avant 50, en forme d'anneau, qui présente un bord extérieur périphérique avant 50.1 ainsi qu'un bord intérieur périphérique avant 50.2 relié à la portion intérieure 46.3 de la lèvre 44 et/ou au panneau intérieur 48,
- un cadre arrière 52, en forme d'anneau, qui présente un bord extérieur périphérique arrière 52.1 relié au bord arrière extérieur 44.1 de la lèvre 44 et un bord intérieur périphérique arrière 52.2 relié au bord arrière 48.2 du panneau intérieur 48.

Selon un mode de réalisation, les cadres avant et arrière 50, 52 sont positionnés approximativement dans deux plans transversaux. En variante, le cadre avant ou arrière peut être légèrement tronconique et former avec un plan transversal un angle de l'ordre de 10°.

Selon une configuration, le panneau intérieur 48 est équipé d'une structure d'atténuation acoustique.

L'entrée d'air 40 comprend un premier système de liaison 54 reliant le bord avant 48.1 du panneau intérieur 48 et le bord arrière intérieur 44.2 de la lèvre 44. Selon un agencement, le bord avant 48.1 du panneau intérieur 48 est plaqué contre la face intérieure F44' de la lèvre 44 au niveau du bord arrière intérieur 44.2 de la lèvre 44. En complément, le premier système de liaison 54 comprend une série d'éléments de liaison 54.1, répartis sur au moins un cercle autour de l'axe longitudinal de l'entrée d'air 40, traversant les parties de la lèvre 44 et du panneau intérieur 48 qui se chevauchent.

Selon un mode de réalisation visible sur la figure 4, le premier système de liaison 54 permet de relier le bord avant 48.1 du panneau intérieur 48, le bord arrière intérieur 44.2 de la lèvre 44 ainsi que le bord intérieur périphérique avant 50.2 du cadre avant 50. Dans ce cas, le bord intérieur périphérique avant 50.2 du cadre avant 50 est recourbé et plaqué contre le bord avant 48.1 du panneau intérieur 48. En complément, le premier système de liaison 54 comprend une série d'éléments de liaison 54.1, répartis sur au moins un cercle autour de l'axe longitudinal de l'entrée d'air 40, traversant les parties de la lèvre 44, du panneau intérieur 48 et du cadre avant 50 qui se chevauchent.

Selon un autre mode de réalisation visible sur la figure 6, l'entrée d'air 40 comprend, en plus du premier système de liaison 54, un deuxième système de liaison 56 reliant le bord intérieur périphérique avant 50.2 du cadre avant 50 et le panneau intérieur 48. Dans ce cas, le bord intérieur périphérique avant 50.2 du cadre avant 50 est recourbé et plaqué contre le panneau intérieur 48 dans une zone écartée du bord avant 48.1 du panneau intérieur 48. En complément, le deuxième système de liaison 56 comprend une série d'éléments de liaison 56.1, répartis sur au moins un cercle autour de l'axe longitudinal de l'entrée d'air 40, traversant le bord intérieur périphérique avant 50.2 du cadre avant 50 et se logeant dans le panneau intérieur 48.

Bien entendu, l'invention n'est pas limitée à ces modes de réalisation. Ainsi, le bord intérieur périphérique avant 50.2 du cadre avant 50 pourrait être recourbé, plaqué contre la lèvre 44 et relié à cette dernière dans une zone écartée du panneau intérieur 48.

L'entrée d'air 40 comprend également un troisième système de liaison 58 reliant le bord intérieur périphérique arrière 52.2 du cadre arrière 52 et le bord arrière 48.2 du panneau intérieur 48. Selon un agencement, le bord intérieur périphérique arrière 52.2 du cadre arrière 52 est recourbé, plaqué contre le bord arrière 48.2 du panneau intérieur 48 (ou contre un élément relié au panneau intérieur 48) et relié à ce dernier. En complément, le troisième système de liaison 58 comprend une série d'éléments de liaison 58.1, répartis sur au moins un cercle autour de l'axe longitudinal de l'entrée d'air 40, traversant le bord intérieur périphérique arrière 52.2 du cadre arrière 52 et se logeant dans le panneau intérieur 48.

Selon un mode de réalisation, l'entrée d'air 40 comprend un système de connexion arrière 60 configuré pour relier l'entrée d'air 40 à la motorisation de l'ensemble de propulsion, plus particulièrement à un carter de soufflante de la motorisation. Selon un mode de réalisation, ce système de connexion arrière 60 comprend au moins une cornière qui présente une première aile 60.1 reliée au panneau intérieur 48 ainsi qu'une deuxième aile 60.2 positionnée dans un plan transversal et destinée à être reliée au carter de soufflante.

Selon une configuration, le bord intérieur périphérique arrière 52.2 du cadre arrière 52 est recourbé, plaqué contre la première aile 60.1 du système de connexion arrière 60 elle-même plaquée contre le panneau intérieur 48, les éléments de liaison 58.1 traversant le bord intérieur périphérique arrière 52.2 du cadre arrière 52, la première aile 60.1 et se logeant dans le panneau intérieur 48.

Bien entendu, l'invention n'est pas limitée à ce mode de réalisation pour relier le panneau intérieur 48, le cadre arrière 52 et/ou le système de connexion arrière 60.

L'entrée d'air 40 comprend un système de liaison 62 reliant directement ou indirectement le bord extérieur périphérique arrière 52.1 du cadre arrière 52 et le bord arrière extérieur 44.1 de la lèvre 44.

Selon une caractéristique de l'invention, l'entrée d'air 40 comprend au moins un élément de jonction 64 reliant les bords extérieurs périphériques avant et arrière 50.1, 52.1 du cadre avant 50 et du cadre arrière 52.

Selon une configuration, l'entrée d'air 40 comprend un unique élément de jonction 64 tubulaire, sensiblement coaxial au panneau intérieur48, qui s'étend sur toute la circonférence de l'entrée d'air 40. Selon un agencement, l'élément de jonction 64 comprend plusieurs parties reliées entre elles de manière à former une pièce d'un seul tenant.

Selon une autre configuration, l'entrée d'air 40 comprend plusieurs éléments de jonction 64 espacés entre eux, répartis autour du panneau intérieur 48.

Selon un mode de réalisation, chaque élément de jonction 64 présente une extrémité avant 64.1 reliée au cadre avant 50 ainsi qu'une extrémité arrière 64.2 reliée au cadre arrière 52. En complément, l'entrée d'air 40 comprend un système de liaison avant 66 reliant l'extrémité avant 64.1 de chaque élément de jonction 64 et le bord extérieur périphérique avant 50.1 du cadre avant 50 ainsi qu'un système de liaison arrière 68 reliant l'extrémité arrière 64.2 de chaque élément de jonction 64 et le bord extérieur périphérique arrière 52.1 du cadre arrière 52.

Selon un mode de réalisation, le bord extérieur périphérique avant 50.1 du cadre avant 50 est recourbé de manière à présenter une forme sensiblement cylindrique, coaxiale à l'extrémité avant 64.1 de l'élément de jonction 64, recouvrant ce dernier. En complément, le système de liaison avant 66 comprend au moins une série d'éléments de liaison 66.1, répartis sur au moins un cercle autour de l'axe longitudinal de l'entrée d'air 40, traversant le bord extérieur périphérique avant 50.1 du cadre avant 50 et l'extrémité avant 64.1 de chaque élément de jonction 64. Bien entendu, l'invention n'est pas limitée à ce mode de réalisation pour la liaison entre le cadre avant 50 et chaque élément de jonction 64.

Selon un mode de réalisation, l'extrémité arrière 64.2 de chaque élément de jonction 64 est recourbée, plaquée contre le bord extérieur périphérique arrière 52.1 du cadre arrière 52. En complément, le système de liaison arrière 68 comprend au moins une série d'éléments de liaison 68.1, répartis sur au moins un cercle autour de l'axe longitudinal de l'entrée d'air 40, traversant l'extrémité arrière 64.2 de chaque élément de jonction 64 et le bord extérieur périphérique arrière 52.1 du cadre arrière 52. Bien entendu, l'invention n'est pas limitée à ce mode de réalisation pour la liaison entre le cadre arrière 52 et chaque élément de jonction 64. Selon un mode de réalisation, la lèvre 44 est reliée à chaque élément de jonction 64 par un système de liaison 70, situé à proximité du bord arrière extérieur 44.1 de la lèvre 44, comportant au moins une série d'éléments de liaison 70.1, répartis sur au moins un cercle autour de l'axe longitudinal de l'entrée d'air 40, traversant la lèvre 44 et chaque élément de jonction 64.

L'élément de jonction 64 est positionné entre la lèvre 44 et le panneau intérieur 48. Chaque élément de jonction 64 présente, au droit du système de liaison 70, une nervure 72 configurée pour espacer la lèvre 44 et chaque élément de jonction 64 en dehors de la nervure 72. La (ou les) nervure(s) 72 est (ou sont) positionnée(s) dans un plan transversal. Selon une configuration, pour chaque élément de jonction 64, la nervure 72 présente une section en forme d'oméga dans des plans passant par l'axe longitudinal de l'entrée d'air 40. Ainsi, la nervure 72 présente une partie centrale 72.1 sensiblement cylindrique, plus espacée du panneau intérieur 48 que le reste de l'élément de jonction 64, ainsi que deux parties tronconiques 72.2, 72.3 reliant la partie centrale 72.1 au reste de l'élément de jonction 64. Bien entendu, l'invention n'est pas limitée à cette forme en oméga pour la nervure 72. L'élément de jonction 64 étant espacé de la lèvre 44 en dehors de la nervure 72, cette dernière est configurée pour plaquer au moins une zone de l'élément de jonction 64 contre la face intérieur F44' de la lèvre 44 pour la relier à la lèvre par le système de liaison 70.

Bien entendu, l'invention n'est pas limitée à ce mode de réalisation pour la liaison reliant la lèvre 44 et le (ou les) élément(s) de jonction 64.

Selon un mode de réalisation, les différents éléments de liaison 54.1, 56.1, 58.1, 66.1, 68.1, 70.1 peuvent être des vis, des boulons ou des rivets.

Selon l'invention, le bord extérieur périphérique avant 50.1 du cadre avant 50 est espacé de la lèvre 44 et n'est pas relié à cette dernière. Par conséquent, l'entrée d'air ne présente aucun élément de liaison, au droit du cadre avant 50, affleurant au niveau de la face extérieure F44 de la lèvre 44 en contact avec le flux d'air extérieur 42.2. Ainsi, ce dernier conserve son caractère laminaire sur une longueur la plus importante possible.

Selon un autre avantage visible sur les figures 4 et 6, la lèvre 44 est reliée au reste de l'entrée d'air par seulement deux systèmes de liaison, ce qui permet de réduire le nombre d'éléments de liaison à démonter ou remonter lors du démontage ou du remontage de la lèvre 44.

De plus, lors du démontage, le cadre arrière 52 reste en place, assurant ainsi la stabilité globale de la géométrie de l'entrée d'air.

Enfin, le panneau intérieur 48, les cadres avant et arrière 50, 52 ainsi que le (ou les) élément(s) de jonction 64 forment une structure en caisson rigide qui renforce l'entrée d'air 40, ce qui offre une meilleure reprise des efforts en cas de choc à l'oiseau.

## Revendications

1. Entrée d'air d'aéronef comprenant :
- une lèvre (44) qui comporte un bord d'attaque (46.1), un bord arrière extérieur (44.1) ainsi qu'un bord arrière intérieur (44.2),
- un panneau intérieur (48) qui comporte un bord avant (48.1) relié au bord arrière intérieur (44.2) de la lèvre (44) et un bord arrière (48.2),
- un cadre avant (50) qui comporte un bord extérieur périphérique avant (50.1) ainsi qu'un bord intérieur périphérique avant (50.2) relié à la lèvre (44) et/ou au panneau intérieur (48),
- un cadre arrière (52) qui comporte un bord extérieur périphérique arrière (52.1), directement ou indirectement, relié au bord arrière extérieur (44.1) de la lèvre (44) et un bord intérieur périphérique arrière (52.2) relié au bord arrière (48.2) du panneau intérieur (48),
- au moins un élément de jonction (64) reliant les bords extérieurs périphériques avant et arrière (50.1, 52.1) du cadre avant (50) et du cadre arrière (52), chaque élément de jonction (64) présentant une extrémité avant (64.1),
- un système de liaison avant (66) reliant l'extrémité avant (64.1) de chaque élément de jonction (64) et le bord extérieur périphérique avant (50.1) du cadre avant (50) ;
**caractérisée en ce que** le bord extérieur périphérique avant (50.1) du cadre avant (50) est espacé de la lèvre (44), n'est pas relié à cette dernière et est recourbé de manière à présenter une forme sensiblement cylindrique et **en ce que** le système de liaison avant (66) comprend au moins une série d'éléments de liaison (66.1), répartis sur au moins un cercle, traversant le bord extérieur périphérique avant (50.1) du cadre avant (50) et l'extrémité avant (64.1) de chaque élément de jonction (64).

2. Entrée d'air d'aéronef selon la revendication 1, **caractérisée en ce que** l'entrée d'air (40) comprend un unique élément de jonction (64) tubulaire, sensiblement coaxial au panneau intérieur (48).

3. Entrée d'air d'aéronef selon la revendication 1, **caractérisée en ce que** l'entrée d'air (40) comprend plusieurs éléments de jonction (64) espacés entre eux, répartis autour du panneau intérieur (48).

4. Entrée d'air d'aéronef selon l'une des revendications précédentes, **caractérisée en ce que** chaque élément de jonction (64) présente une extrémité arrière (64.2) et **en ce que** l'entrée d'air (40) comprend un système de liaison arrière (68) reliant l'extrémité arrière (64.2) de chaque élément de jonction (64) et le bord extérieur périphérique arrière (52.1) du cadre arrière (52).

5. Entrée d'air d'aéronef selon la revendication précédente, **caractérisée en ce que** l'extrémité arrière (64.2) de chaque élément de jonction (64) est recourbée et plaquée contre le bord extérieur périphérique arrière (52.1) du cadre arrière (52) et **en ce que** le système de liaison arrière (68) comprend au moins une série d'éléments de liaison (68.1), répartis sur au moins un cercle, traversant l'extrémité arrière (64.2) de chaque élément de jonction (64) et le bord extérieur périphérique arrière (52.1) du cadre arrière (52).

6. Entrée d'air d'aéronef selon l'une des revendications précédentes, **caractérisée en ce que** la lèvre (44) et chaque élément de jonction (64) sont reliés par un système de liaison (70) situé à proximité du bord arrière extérieur (44.1) de la lèvre (44).

7. Entrée d'air d'aéronef selon la revendication précédente, **caractérisée en ce que** chaque élément de jonction (64) présente une nervure (72), au droit du système de liaison (70), configurée pour espacer la lèvre (44) et chaque élément de jonction (64) en dehors de la nervure (72).

8. Entrée d'air d'aéronef selon la revendication précédente, **caractérisée en ce que**, pour chaque élément de jonction (64), la nervure (72) présente une partie centrale (72.1) sensiblement cylindrique, plus espacée du panneau intérieur (48) que le reste de l'élément de jonction (64), ainsi que deux parties tronconiques (72.2, 72.3) reliant la partie centrale (72.1) au reste de l'élément de jonction (64).

9. Aéronef comportant au moins un ensemble de propulsion qui comprend une entrée d'air selon l'une des revendications précédentes.

## Patentansprüche

1. Lufteinlass eines Luftfahrzeugs, der aufweist:
- einen Wulst (44), der eine Anströmkante (46.1), eine äußere Hinterkante (44.1) sowie eine innere Hinterkante (44.2) aufweist,
- eine Innenplatte (48), die eine mit der inneren Hinterkante (44.2) des Wulsts (44) verbundene Vorderkante (48.1) und eine Hinterkante (48.2) aufweist,
- einen vorderen Rahmen (50), der eine umfängliche vordere Außenkante (50.1) sowie eine umfängliche vordere Innenkante (50.2) aufweist, die mit dem Wulst (44) und/oder der Innenplatte (48) verbunden ist,
- einen hinteren Rahmen (52), der eine umfängliche hintere Außenkante (52.1), die direkt oder indirekt mit der äußeren Hinterkante (44.1) des Wulsts (44) verbunden ist, und eine umfängliche hintere Innenkante (52.2) aufweist, die mit der Hinterkante (48.2) der Innenplatte (48) verbunden ist,
- wenigstens ein Verbindungselement (64), das die vorderen und hinteren Außenkanten (50.1, 52.1) des vorderen Rahmens (50) und des hinteren Rahmens (52) verbindet, wobei das Verbindungselement (64) jeweils ein vorderes Ende (64.1) aufweist,
- ein vorderes Verbindungssystem (66), das das vordere Ende (64.1) jedes Verbindungselements (64) mit der vorderen Außenkante (50.1) des vorderen Rahmens (50) verbindet,
**dadurch gekennzeichnet, dass** die umfängliche vordere Außenkante (50.1) des vorderen Rahmens (50) von dem Wulst (44) beabstandet ist, nicht mit diesem verbunden ist und so gebogen ist, dass sie eine im Wesentlichen zylindrische Form aufweist, und dass das vordere Verbindungssystem (66) wenigstens eine Reihe von Verbindungselementen (66.1) aufweist, die auf wenigstens einem Kreis verteilt sind und die die umfängliche vordere Außenkante (50.1) des vorderen Rahmens (50) und das vordere Ende (64.1) jedes Verbindungselements (64) durchqueren.

2. Lufteinlass eines Luftfahrzeugs nach Anspruch 1, **dadurch gekennzeichnet, dass** der Lufteinlass (40) ein einziges rohrförmiges Verbindungselement (64) aufweist, das im Wesentlichen koaxial zur Innenplatte (48) ist.

3. Lufteinlass eines Luftfahrzeugs nach Anspruch 1, **dadurch gekennzeichnet, dass** der Lufteinlass (40) mehrere voneinander beabstandete Verbindungselemente (64) aufweist, die um die Innenplatte (48) herum verteilt sind.

4. Lufteinlass eines Luftfahrzeugs nach einem der vorstehenden Ansprüche, **dadurch gekennzeichnet, dass** jedes Verbindungselement (64) ein hinteres Ende (64.2) aufweist und dass der Lufteinlass (40) ein hinteres Verbindungssystem (68) umfasst, das das hintere Ende (64.2) jedes Verbindungselements (64) und die umfängliche hintere Außenkante (52.1) des hinteren Rahmens (52) verbindet.

5. Lufteinlass eines Luftfahrzeugs nach dem vorstehenden Anspruch, **dadurch gekennzeichnet, dass** das hintere Ende (64.2) jedes Verbindungselements (64) gebogen und an die umfängliche hintere Außenkante (52.1) des hinteren Rahmens (52) angesetzt ist und dass das hintere Verbindungssystem (68) wenigstens eine Reihe von Verbindungselementen (68.1) aufweist, die auf wenigstens einem Kreis verteilt sind und das hintere Ende (64.2) jedes Verbindungselements (64) sowie die umfängliche hintere Außenkante (52.1) des hinteren Rahmens (52) durchqueren.

6. Lufteinlass eines Luftfahrzeugs nach einem der vorstehenden Ansprüche, **dadurch gekennzeichnet, dass** der Wulst (44) und jedes Verbindungselement (64) durch ein Verbindungssystem (70) verbunden sind, das sich in der Nähe der äußeren Hinterkante (44.1) des Wulsts (44) befindet.

7. Lufteinlass eines Luftfahrzeugs nach dem vorstehenden Anspruch, **dadurch gekennzeichnet, dass** jedes Verbindungselement (64) im Bereich des Verbindungssystems (70) eine Rippe (72) aufweist, die dazu eingerichtet ist, den Wulst (44) und jedes Verbindungselement (64) abseits der Rippe (72) zu beabstanden.

8. Lufteinlass eines Luftfahrzeugs nach dem vorstehenden Anspruch, **dadurch gekennzeichnet, dass** für jedes Verbindungselement (64) die Rippe (72) einen im Wesentlichen zylindrischen Mittelabschnitt (72.1) aufweist, der weiter von der Innenplatte (48) beabstandet ist als der Rest des Verbindungselements (64), sowie zwei kegelstumpfförmige Abschnitte (72.2, 72.3), die den mittleren Abschnitt (72.1) mit dem Rest des Verbindungselements (64) verbinden.

9. Luftfahrzeug, das wenigstens eine Antriebseinheit aufweist, die einen Lufteinlass gemäß einem der vorstehenden Ansprüche aufweist.

## Claims

1. Aircraft air intake comprising:
- a lip (44) which comprises a leading edge (46.1), an outer rear edge (44.1) and an inner rear edge (44.2),
- an internal panel (48) which comprises a front edge (48.1) linked to the inner rear edge (44.2) of the lip (44) and a rear edge (48.2),
- a front frame (50) which comprises a front peripheral outer edge (50.1) and a front peripheral inner edge (50.2) linked to the lip (44) and/or to the internal panel (48),
- a rear frame (52) which comprises a rear peripheral outer edge (52.1) directly or indirectly linked to the outer rear edge (44.1) of the lip (44) and a rear peripheral inner edge (52.2) linked to the rear edge (48.2) of the internal panel (48),
- at least one joining element (64) linking the front and rear peripheral outer edges (50.1, 52.1) of the front frame (50) and of the rear frame (52), each joining element (64) has a front end (64.1),
- a front link system (66) linking the front end (64.1) of each joining element (64) and the front peripheral outer edge (50.1) of the front frame (50);
wherein the front peripheral outer edge (50.1) of the front frame (50) is spaced from the lip (44), is not connected to the latter and is bent back so as to have a substantially cylindrical form and in that the front link system (66) comprises at least one series of link elements (66.1), distributed over at least one circle, passing through the front peripheral outer edge (50.1) of the front frame (50) and the front end (64.1) of each joining element (64) .

2. Aircraft air intake as claimed in claim 1, wherein the air intake (40) comprises a single tubular joining element (64), substantially coaxial to the internal panel (48).

3. Aircraft air intake as claimed in claim 1, wherein the air intake (40) comprises several joining elements (64) spaced apart from one another, distributed around the internal panel (48).

4. Aircraft air intake as claimed in one of the preceding claims, wherein each joining element (64) has a rear end (64.2) and the air intake (40) comprises a rear link system (68) linking the rear end (64.2) of each joining element (64) and the rear peripheral outer edge (52.1) of the rear frame (52).

5. Aircraft air intake as claimed in the preceding claim, wherein the rear end (64.2) of each joining element (64) is bent back and pressed against the rear peripheral outer edge (52.1) of the rear frame (52) and the rear link system (68) comprises at least one series of link elements (68.1), distributed over at least one circle, passing through the rear end (64.2) of each joining element (64) and the rear peripheral outer edge (52.1) of the rear frame (52).

6. Aircraft air intake as claimed in one of the preceding claims, wherein the lip (44) and each joining element (64) are linked by a link system (70) situated in proximity to the outer rear edge (44.1) of the lip (44).

7. Aircraft air intake as claimed in the preceding claim, wherein each joining element (64) has a rib (72), in line with the link system (70), configured to space apart the lip (44) and each joining element (64) outside of the rib (72).

8. Aircraft air intake as claimed in the preceding claim, wherein, for each joining element (64), the rib (72) has a substantially cylindrical central part (72.1), more spaced apart from the internal panel (48) than the rest of the joining element (64), and two tapered parts (72.2, 72.3) linking the central part (72.1) to the rest of the joining element (64).

9. Aircraft comprising at least one propulsion assembly which comprises an air intake as claimed in one of the preceding claims.
